# EUROPEAN PATENT APPLICATION

(11) **EP 2 453 130 A2**
(43) Date of publication of application: **16.05.2012**
(21) Application number: 12153962.1
(22) Date of filing: 22.12.2006
(51) Int. Cl.: F03D 1/02, F03D 9/00, F03D 11/00

(54) **Multiple generator wind turbine**

(62) Divisional of application: 06842801.0
(71) Applicant: Wilic S.ar.l., 1724 Luxembourg (LU)
(72) Inventor: Pabst, Otto, 39037 Rio Pusteria (IT)
(74) Representative: Jorio, Paolo

(57) **Abstract**

A multiple generator wind turbine comprises a support structure (2) including a support tower (4) and a connecting structure (3) mounted atop the support tower (4); at least two generators (110, 120) each including a substantially tubular rotor (113, 123) and a substantially tubular stator (114, 124) supported by the connecting structure (3); each rotor (113, 114) and each stator (114; 124) carrying one of mutually opposed magnetic field generators and windings and being substantially concentric such that one of the stator (114; 124) and rotor (113; 123) lies at least partly within the other of the stator (114, 124) and rotor (113, 123) and such that the mutually opposed magnetic field generators and windings face each other; a blade arrangement (6) on a side of one (110) of the generators opposite the support structure (2), the blade arrangement (6) including a hub attached to a rotor (113) of the one of the two generators (110, 120), and at least two blades extending radially from and supported by the hub; wherein one generator (110) is mounted between the connecting structure (3) and the blade arrangement (6) on one side of the connecting structure (3) and the other generator (120) is mounted on a side of the connecting structure opposite the blade arrangement (6) and the rotor (113) of one generator (110) is mechanically connected to the rotor (114) of the other generator (124).

## Description

### TECHNICAL FIELD

The present invention relates to a wind power generator or turbine. More particularly, embodiments relate to a large-scale wind powered machine including two or more power generators and that accommodates humans within the workings for easy access and maintenance while providing efficient cooling of components and/or de-icing of blades. Embodiments are particularly suited to electrical power generation via wind power. Wind powered machines, particularly large scale electrical generators, include blades mounted on a hub attached to a rotor that rotates when wind passes over the blades. The rotation of the rotor is then used to drive machinery, such as pumps or electrical generators. In the case of electrical generators, the rotor will typically carry conductor windings/coils or magnetic field generators that face magnetic field generators or conductor windings/coils, respectively, on a stator such that there is relative motion between the coils and the magnetic field generators, producing electricity. The magnetic field generators are typically field windings that are electromagnets powered by the electrical generator once it begins producing electricity, but that require electricity from a battery or the like before the electrical generator produces electricity.

### BACKGROUND ART

Large scale wind powered electrical generators are becoming more common, particularly in onshore and offshore wind farm applications. In such large scale generators, a tower supports a nacelle housing the stator, which supports the rotor, which supports the hub and blades. Equipment required for controlling the generator, including controls for the blades and other machinery, can be housed in the tower, the nacelle, and/or in cavities within the stator and/ or the rotor. As suggested by this description, such wind machines typically include a single rotor and a single stator. In the power generation industry, there is a constant demand for more power production and/or higher efficiency in power production. A difficulty associated with meeting these demands with single generator arrangements is that a high-power generator can be quite heavy, impeding assembly of the wind machine. As generators are built to produce more power, the quantity of magnets and coils must increase by increasing diameter of the generator, allowing more magnets and coils to be installed, increasing the length of the generator, allowing longer magnets and coils to be used, or both. Increases in diameter and length present transportation and support-structure related problems in that the roads on which components will be transported can only handle so large an object and the structures involved in supporting a long object can be more complicated and expensive. Additionally, such high-power generators tend to be more difficult to drive than lower-power generators, requiring higher initial operating wind speed and/ or larger blades.

Some prior art wind machines attempt to overcome these difficulties by employing more than one rotor, more than one stator, or more than one of both rotor and stator. For example, U.S. Published Applications Nos. 2006/0066110 and 2006/0071575 disclose wind turbines including at least one double-sided stator and at least one double-sided rotor. The stator and the rotor are concentrically arranged so that the rotor has both inner and outer magnetic sides that rotate with respect to respective faces of the stator. While the rotor and stator of this arrangement are both horizontally axially arranged, the support arrangement of this arrangement requires one single bearing and one double bearing to support the rotor on the stator. This arrangement does increase power output for a given diameter wind power generator, it does not overcome the weight issue described above in that the double-sided rotor and double-sided stator are both still single components. In fact, this arrangement might even worsen the weight issue since there is more material on each of the rotor and stator. U.S. Patent No. 6,278,197 discloses another wind power generator that employs a horizontally axially arranged first rotor and replaces the usual stator with a concentric, contra-rotating second rotor that is also horizontally axially arranged. The first rotor rotates opposite to the second rotor, thereby increasing power output by effectively increasing the speed of rotation of the rotor. While this is an interesting solution to the problem of obtaining more power from a given diameter generator, it introduces undesirable complexities in the support and wind harnessing structures of the device.

U.S. Patents Nos. 6,285,090 and 7,042,109, as well as PCT Application No. WO 01/06623 A1, disclose wind turbines each employing a double sided rotor within a double sided stator. Unlike embodiments and the devices discussed above, the rotor and stator are radially arranged, presenting disc-like faces to each other rather than the annuli and/or cylinders of embodiments and the devices above, though the '109 patent includes an annular embodiment. The structure is analogous to those above in that each side of the inner disc carries magnets while each face of the outer discs carries windings/coils, or vice versa. Multiple discs can be employed to create multiple generators within the turbine. Because of the disc configuration, the length increase associated with the power increase seen by adding a disc set is reduced as compared to an annular configuration. However, while possibly increasing power output for a given turbine diameter, weight is still an issue. Additionally, because the power generating components extend vertically in generators employing discoid rotors and stators, an increase in disc diameter is required for an increase in power output.

U.S. Patent 6,504,260 discloses another disc-configured wind turbine, but in which contra-rotating rotors are powered by respective sets of blades. This contra- rotating arrangement differs from that of the 6,278,197 patent in that each rotor has a respective stators instead of having oppositely-rotating rotors. Thus, the turbine has two independent power generation and collection arrangements mounted on opposite sides of a support tower substantially symmetrically. While this allows the use of two smaller generators to create a high power wind turbine, the use of completely independent drive and power collection systems introduces undesirable cost and complexity into the device. Additionally, because the power generating components extend vertically in generators employing discoid rotors and stators, an increase in disc diameter is required for an increase in power output.

### DISCLOSURE OF INVENTION

The various embodiments of the present invention avoid the shortcomings of conventional wind power generators by providing a multiple generator wind turbine with a simpler structure, yielding higher power output for a given turbine diameter while keeping component diameter, weight, length, and cost down. Additionally, embodiments employ a largely hollow construction in which a maximum of ventilation possibilities is available for cooling and/or de-icing. In addition, embodiments afford a large degree of accessibility to the various components of the generator while providing a high level of structural stiffness. Embodiments further allow for the use of standard components, particularly in embodiments in which modular arrangements are employed, which can result in easier manufacture, assembly, and production. By virtue of the mounting of generators on opposite sides of the support structure according to embodiments, optimization of loads on the wind turbine can be realized.

In a preferred embodiment, the wind power generator is a multipolar, gearless, synchronous generator that extends substantially horizontally and is largely hollow by virtue of the use of modular coaxial tubular stator and rotor elements. For additional simplification, embodiments employ permanent magnets on one of stator and rotor, and windings/coils on the other of stator and rotor. In a first arrangement, a single set of blades is mounted on a side of a supporting structure. A first rotor is mounted on the blade side of the turbine, while a second rotor is mounted on the opposite side of the turbine in substantially symmetric arrangement. Respective stators are mounted concentrically with the rotors to enable power generation when the rotors rotate relative to their respective stators. A shaft connects the two rotors, and the two are driven by the single set of blades. For example, the blade-side rotor can be driven by the blades and connected to the shaft, which drives the opposite rotor. In embodiments, the shaft includes two half shafts extending from the rotors toward the center of the turbine. The end of one half shaft is inserted into the end of the other and connected to form the shaft.

In a second arrangement according to embodiments, multiple generators are coaxially arranged between the turbine blades and the support structure of the turbine. Thus, the turbine blades drive a first rotor that is connected to and drives the second rotor, each having a respective concentric stator. Embodiments of course allow use of more than two rotors. The first rotor serves simultaneously as a shaft that can be supported by bearings and as a structure for anchoring power generation elements. Advantageously, the first and second arrangements can be used together such that multiple generators can be mounted on either side of the support structure of the turbine, the two generator clusters being connected by a shaft or other suitable connector between the two generators. Thus, a first rotor can drive a second rotor in a first cluster on the blade side of the turbine and a third rotor can drive a fourth rotor in a second cluster on the opposite side of the turbine.

A third arrangement employs a double-sided rotor within two concentric stators in a fashion similar to the annular arrangement discussed above. The double-sided rotor includes an annular portion with inner and outer surfaces extending substantially horizontally. One set of rotor elements is mounted on the inner surface and another set of rotor elements is mounted on the outer surface, each set of rotor elements facing a corresponding set of stator elements. The inner stator elements are preferably mounted on an outer surface of an annulus arranged within the double-sided rotor, while the outer stator elements are preferably mounted on the inner surface of the housing of the turbine.

A fourth arrangement employs multiple generators with double-sided rotors and so is effectively a combination of the first and second arrangements described above. As with the second arrangement, the rotor of a first generator connected to the blades is connected to a second generator, such as to the rotor of the second generator, to drive the second generator.

As should be apparent, embodiments can use an annular generator of the first arrangement with a concentric generator of the third arrangement. The order in which they are arranged will depend on the particular requirements of the wind turbine in which they are to be installed. Thus, in some situations, the rotor of the simple annular generator could be connected to the blades and drive the rotor of the concentrically arranged generator, but in others, the double-sided rotor of the concentrically arranged generator will be connected to the blades and drive the rotor of the simple annular generator.

In any arrangement, and in the combination, a clutch can be placed between a respective pair of generators to allow removal of the downstream generator(s) from the drive train. This allows the turbine to operate in a lower-power mode in which a lower wind speed is required for power generation, then, if demand or wind speed increases, reengage the downstream generator(s) to increase power output. Conversely, if the turbine is operating with all generators engaged, the clutch(es) can be disengaged when the wind drops below the minimum speed for operation with all generators, allowing power generation at lower wind speeds. Preferably, the clutch is automated mechanically or electrically so that rotational speed causes engagement. For example, a centrifugal clutch could be used so that the downstream generator(s) would be off line until the first rotor reached a predetermined speed, at which point the clutch would gradually engage the next rotor to bring the next rotor up to speed.

The generator of embodiments is the integrating component of the supporting structure, and the loads are transferred directly from the hub onto the rotor shaft of the generator. The tubular rotor element transfers the loads into the tubular stator body by way of one bearing in each generator of the electrical machine.

The largely hollow structure of embodiments provides several advantages over the structures of the prior art. For example, housing electrical and electronic subsystems inside the nacelle affords excellent protection from lightning since the structure employs the principle of the Faraday cage. In addition, because the tubular structure is configured to accommodate the passage of adult humans, it permits easy access to the front portion of the nacelle and to the hub, which facilitates maintenance and repair work on other subsystems of the wind power generator. This also allows one to mount the hub from the inside.

The substantially hollow structure also facilitates use of the heat given off by equipment, such as power electronics, housed in the tower, as well as heat released by the generator itself. The heat can promote the chimney effect to guide warm air into the hub and from there into and through the rotor blades. The warm air can thus be used as a particularly efficient de-icing system in cooler times of the year, and provides a cooling effect for equipment in the generator as cooler air is drawn into and passes through the hollow structure. No external energy needs to be supplied during operation to heat the rotor blades. Thus, the heat given off by the generator and by the power electronics themselves is put to use in a simple fashion.

Additional cooling benefits are derived from the hollow structure since the components that produce heat are moved to the periphery of the generator. More specifically, the generator of embodiments places the windings on the inner periphery of the generator housing. Heat produced by the windings during electricity generation is easily conducted to the outer surface of the generator. By adding cooling fins on the outer surface according to embodiments, the heat can be transferred from the generator to the air stream passing over the generator during electricity production. The cooling fins preferably project transversely from the outer surface and are substantially equally spaced apart. While the fins extend longitudinally along the outer surface, they can also have a sweep or profile that takes into account disturbances in the air stream introduced by motion of the blades and/or the fins themselves to enhance effectiveness.

In embodiments, each generator has permanent magnets on an outer body and has windings/coils on an interior body. This yields a machine having a stator unit on the inside and a rotor on the outside. The magnets are preferably attached to the inner surface of the rotor in this arrangement, and the windings to the outer surface of the rotor shaft. The advantages of such a solution are a greater specific output, the possibility of using the total heat released by the generator for the de-icing system, and a simplification of the positioning of the power cables required to conduct the electric current from the generator to the tower.

Preferably, each rotor is supported via a single bearing, preferably of the tapered roller type. The single bearing arrangement provides simplification of the generator mounting structure since only one-side need accommodate a bearing. The single bearing arrangement also eliminates hazardous eddy currents in the generator that form temporary circuits between the stator wall, the rotor wall, and roller bodies of the bearings disposed at the ends of the active portion (windings/coils) of the two bearing arrangement. Further, the single bearing arrangement simplifies adjustment processes of the bearing since the tapered rollers must be pre-stressed; embodiments with two bearings, one at each end of the generator, present design problems with respect to the construction tolerances and thermal deformation. The single bearing arrangement requires only one system of seals and lubrication concentrated in the front region of the generator. And the bearing typology used in the single bearing arrangement offers a high degree of rolling precision since pre-stressing the rollers substantially eliminates play in the bearing, as well as providing a low rolling resistance that increases generator productivity and efficiency.

### BRIEF DESCRIPTION OF THE DRAWINGS

Additional features and details are contained in the claims and in the description of a power generator actuated by wind, in its preferred embodiments as illustrated in the accompanying drawings, in which:
FIG. 1 shows a sectional view along a vertical axial plane of a multiple power generator wind turbine in which the generators are on opposed sides of a wind turbine support structure in accordance with embodiments;
FIG. 2 shows a sectional view along a vertical axial plane of a multiple power generator wind turbine in which the generators are in series on one side of a wind turbine support structure in accordance with embodiments ;
FIG. 3 shows a sectional view along a vertical axial plane of a multiple power generator wind turbine in which the generators are concentric in accordance with embodiments;
FIG. 4 shows a sectional view along a vertical plane of a multiple power generator wind turbine in accordance with embodiments that is similar to that of FIG. 1, but using multiple generators on each side of the support structure similar to the wind turbine shown in FIG. 2;
FIG. 5 shows a sectional view along a vertical plane of a multiple power generator wind turbine in accordance with embodiments that is similar to that of FIGS. 2 and 3, employing a multiple concentric generator of FIG. 3 on each side of the support structure similar to the wind turbine shown in FIG. 2;
FIG. 6 shows a sectional view along a vertical plane of a multiple power generator wind turbine in accordance with embodiments that is similar to that of FIGS. 2 and 3, employing multiple concentric generators of FIG. 3 in series on each side of the support structure similar to the wind turbine shown in FIG. 2;
FIG. 7 shows a sectional view along a vertical plane of a multiple power generator wind turbine in accordance with embodiments that is similar to that of FIGS. 1 and 3, employing multiple concentric generators of FIG. 3 in series on one side of the support structure similar to the wind turbine shown in FIG. 1;
FIG. 8 shows a sectional view along a vertical plane of a multiple power generator wind turbine in accordance with embodiments that is similar to that of FIG. 7, but employing a more modular form;
FIG. 9 shows a multiple power generator wind turbine as in FIG. 1, but also including at least one clutch in accordance with embodiments;
FIG. 10 shows a multiple power generator wind turbine as in FIG. 2, but also including at least one clutch in accordance with embodiments;
FIG. 11 shows a multiple power generator wind turbine as in FIG. 4, but also including at least one clutch in accordance with embodiments;
FIG. 12 shows a multiple power generator wind turbine as in FIG. 5, but also including at least one clutch in accordance with embodiments;
FIG. 13 shows a multiple power generator wind turbine as in FIG. 6, but also including at least one clutch in accordance with embodiments;
FIG. 14 shows a multiple power generator wind turbine as in FIG. 7, but also including at least one clutch in accordance with embodiments;
FIG. 15 shows a multiple power generator wind turbine as in FIG. 8, but also including at least one clutch in accordance with embodiments.
FIG. 16 shows a sectional view along a vertical plane of a multiple power generator wind turbine in accordance with embodiments that combines different types of generators.
FIG. 17 shows a multiple power generator wind turbine as in FIG. 16, but also including at least one clutch in accordance with embodiments

### BEST MODE FOR CARRYING OUT THE INVENTION

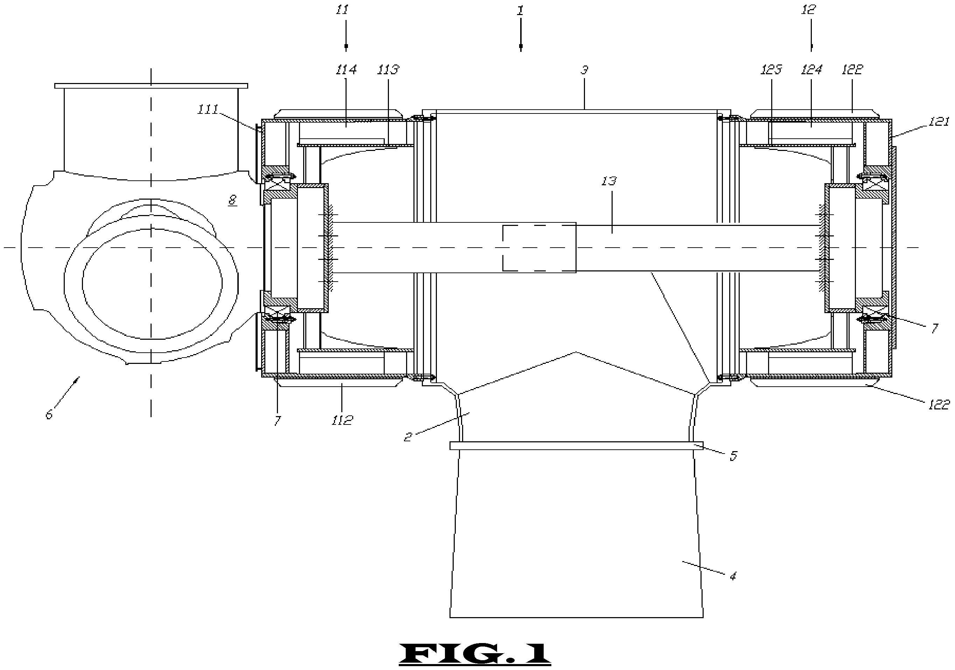

In FIG. 1 a multiple power generator wind turbine is generally indicated by the reference number 1. A support structure 2 of the wind turbine 1 includes a connecting structure 3 that rests atop a support tower 4, preferably with a rotatable connection 5 allowing the single drive blade arrangement 6 to face the direction from which wind blows. The blade arrangement 6 includes a plurality of blades and drives two generators 110, 120. As shown in FIG. 1, the generators 110, 120 can be arranged with one generator 110 on a blade side of the support structure 2 and another generator 120 on the opposite side of the support structure. The housings 111, 121 of the generators 110, 120 each preferably carry a plurality of circumferentially-distributed cooling fins 112, 122 that draw heat away from the generators 110, 120, releasing the heat into the slipstream as air passes over the fins 112, 122. The blade side generator 110 includes a rotor 113 connected to the drive blade arrangement 6, which rotates the rotor 113 within its housing 111 and within a stator 114 attached to the connecting structure 3. Preferably, the housings 111, 121 are the outer surfaces of the stators 114, 124, which stators are a principal source of heat within the generators 110, 120. The rotor 113 of the first generator 110 in embodiments is mechanically connected to the rotor 121 of the second generator, thereby providing drive to the second generator 120. Each rotor 113, 123 is supported by a bearing 7 that can be mounted in a respective stator 114, 124 to allow rotation of the rotor 113, 123. Preferably, the rotor 113 of the first generator 110 is selectively mechanically connected to the rotor 123 of the second generator via a clutch, thereby allowing operation of the turbine 1 with only one generator producing power when wind speed is too low to drive both generators.

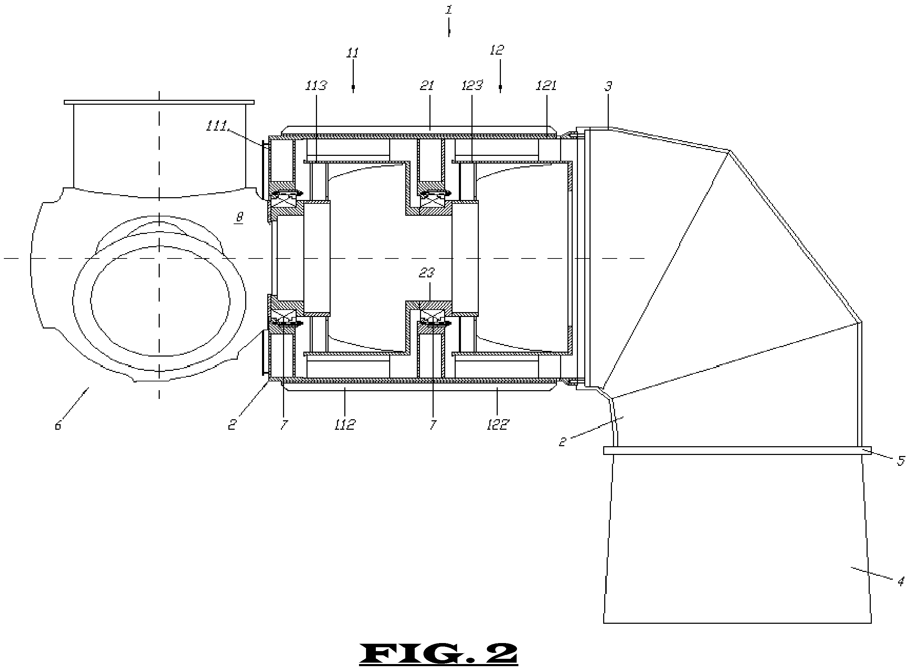

In an alternative embodiment seen in FIG. 2, the multiple power generator wind turbine 1 again includes two generators 110, 120, but they are both on one side of the supporting structure 2. Thus, the drive blade arrangement 6 is connected to the rotor 113 of the first generator 110, which is connected to the second rotor 123 via a relatively short connector 230, such as a short tube. In this arrangement, the two housings 111, 121 can be combined into a single housing 200, and the fins 112, 122 can be combined to form one longer plurality of circumferentially-distributed cooling fins 210 extending from the housing 200.

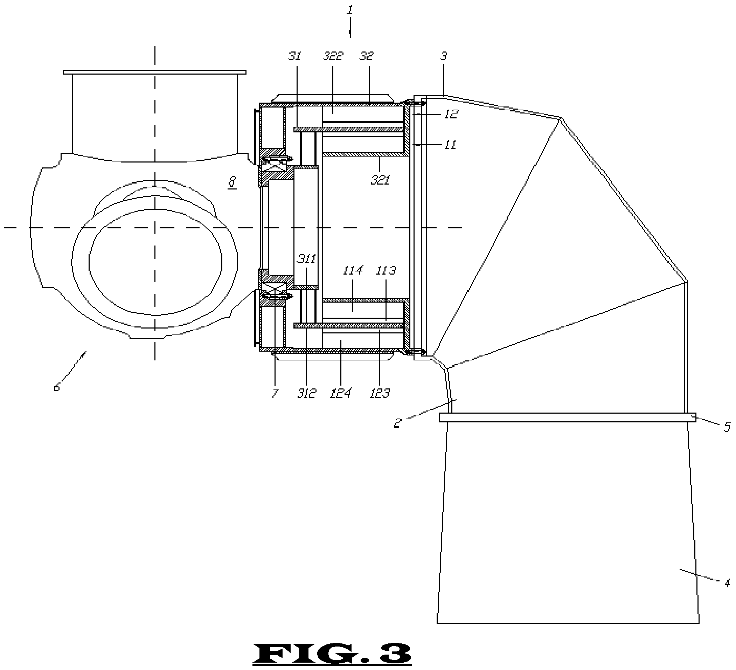

As seen in FIG. 3, in another alternative embodiment, the first and second generators 110, 120 can be concentrically arranged by using a double sided rotor 310, one side of which, such as the inner side 311, carries the first rotor 113, and the other side of which, such as the outer side 312, carries the second rotor 123. The double sided rotor 310 rotates within a double stator 320 with the first rotor 113 facing the first stator 114 on the outer surface of an inner portion 321 of the double stator 320 and the second rotor 123 facing the second stator 124 on the inner surface of an outer portion 322 of the double stator 320. The blade arrangement 6 thus drives the double sided rotor 310 within the double stator 320 to produce power.

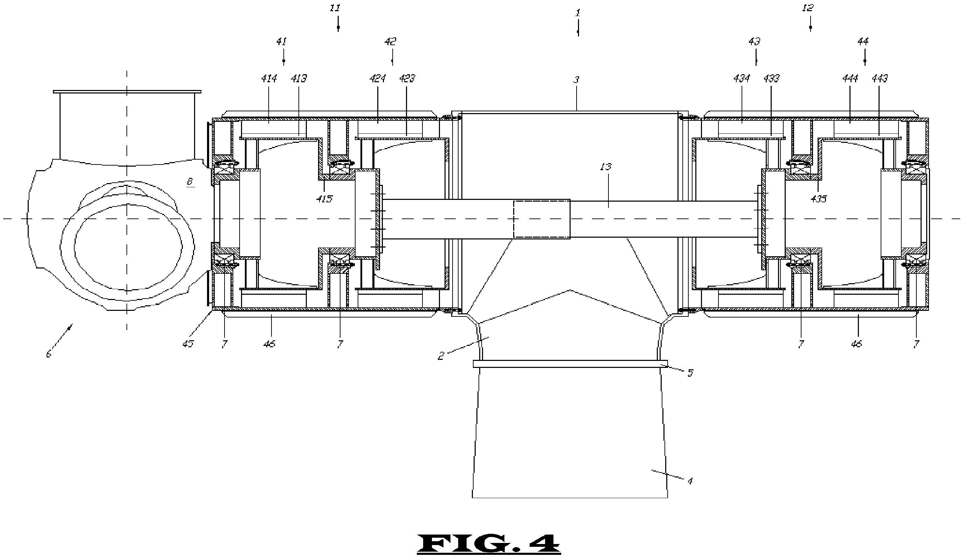

The additional alternative embodiment of a wind turbine 1 shown in FIG. 4 employs two generators 110, 120 arranged on opposite sides of the supporting structure 2 as in FIG. 1, but each generator 110, 120 itself includes multiple generators, all driven by the single blade arrangement 6. For convenience, the first and second generators 110, 120, will be called first and second generator clusters with respect to FIGS. 4-7. On the blade side of the supporting structure 2, the first generator cluster 110 includes at least two generators 410, 420 arranged in series as in FIG. 2, while the second generator cluster 120 on the opposite side of the supporting structure 2 includes at least two generators 430, 440 similarly arranged. The first rotor 413 is driven by the blades 6 to rotate within its stator 414, the first rotor being connected to the second rotor via a relatively short shaft 415. The second rotor 423 of the first cluster 110 is connected to the main shaft 130, which is mechanically connected to the first rotor 433 of the second generator cluster 120, providing drive to the second cluster 120. The first rotor 433 of the second cluster 120 rotates within its respective stator 434 and is connected to the second rotor 443 of the second cluster 120 via a relatively short shaft 435. The housings of the generators 410, 420 of the first cluster 110 and the generators 430, 440 of the second cluster can be merged into a single housing 450 on each side of the supporting structure 2 as in the turbine shown in FIG. 2. Likewise, the fins can be combined into a single set of longer, circumferentially-distributed fins 460 on each housing 450.

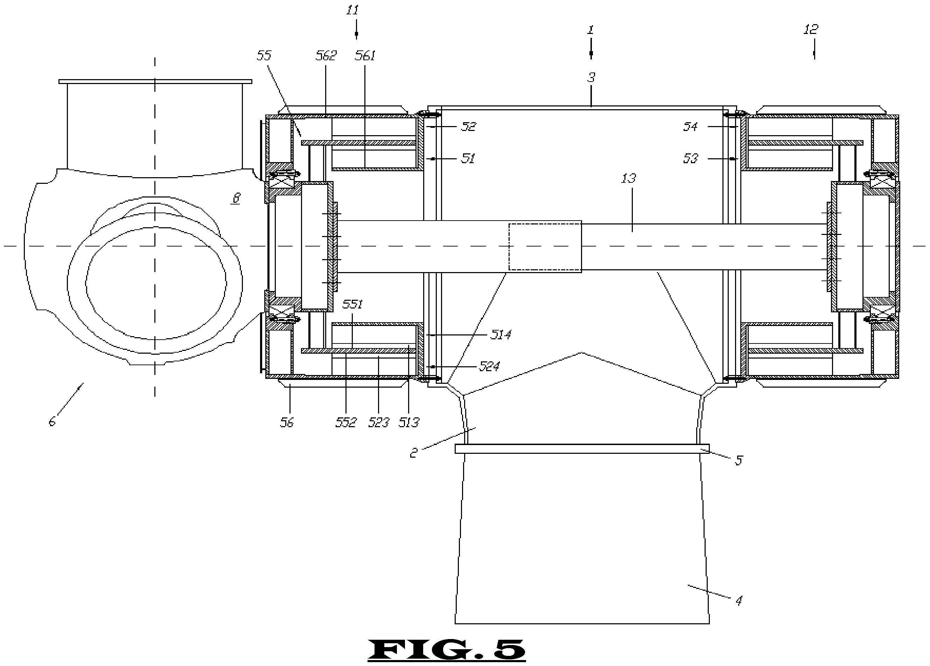

The wind turbine 1 as shown in FIG. 5 in another embodiment again employs two generator clusters 110, 120 arranged on opposite sides of the supporting structure 2 and connected by a main shaft 130 as in FIGS. 1 and 4, but the generators of each cluster are concentric as in FIG. 3. On the blade side of the supporting structure 2, the first cluster 110 includes at least two generators 510, 520 arranged concentrically as in FIG. 3, while the second cluster 120 on the opposite side of the supporting structure 2 includes at least two generators 530, 540 similarly arranged. The first double sided rotor 550, one side of which, such as the inner side 551, carries the first rotor 513, and the other side of which, such as the outer side 552, carries the second rotor 523. The double sided rotor 550 rotates within a double stator 560 with the first rotor 513 facing the first stator 514 on the outer surface of an inner portion 561 of the double stator 560 and the second rotor 523 facing the second stator 524 on the inner surface of an outer portion 562 of the double stator 560. The first rotor 513 is driven by the blades 6 to rotate within its stator 514, the first rotor 513 being connected to the first rotor 533 of the second cluster 120 via the main shaft 130.

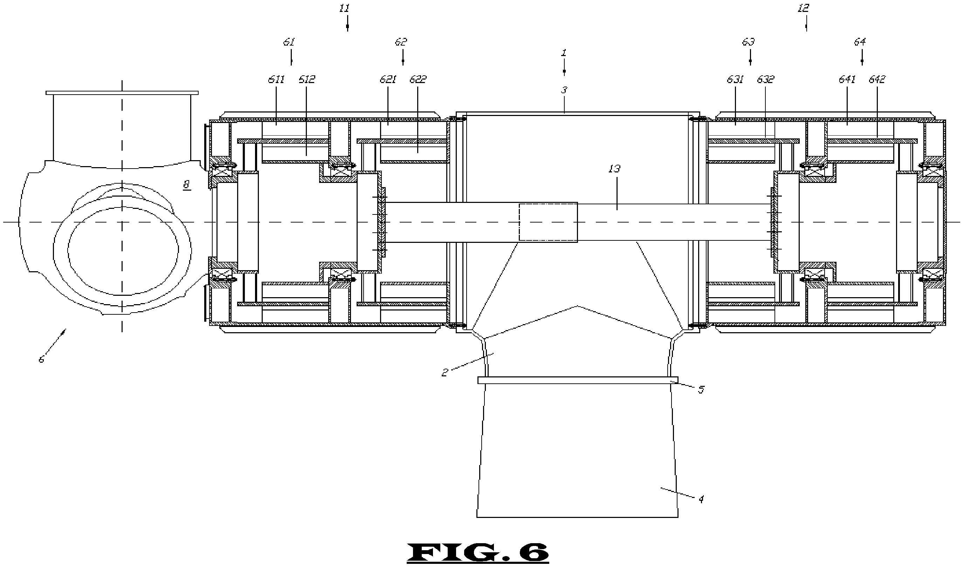

FIG. 6 shows a wind turbine according to another embodiment that combines the concentric multiple cluster arrangement of FIG. 5 with the serial arrangement of FIG. 2. The blade arrangement 6 drives the first rotor, which drives the second rotor, which is mechanically connected to the second cluster via the main shaft 130. In the second cluster 120, a first rotor is connected to the main shaft 130 and the second rotor.

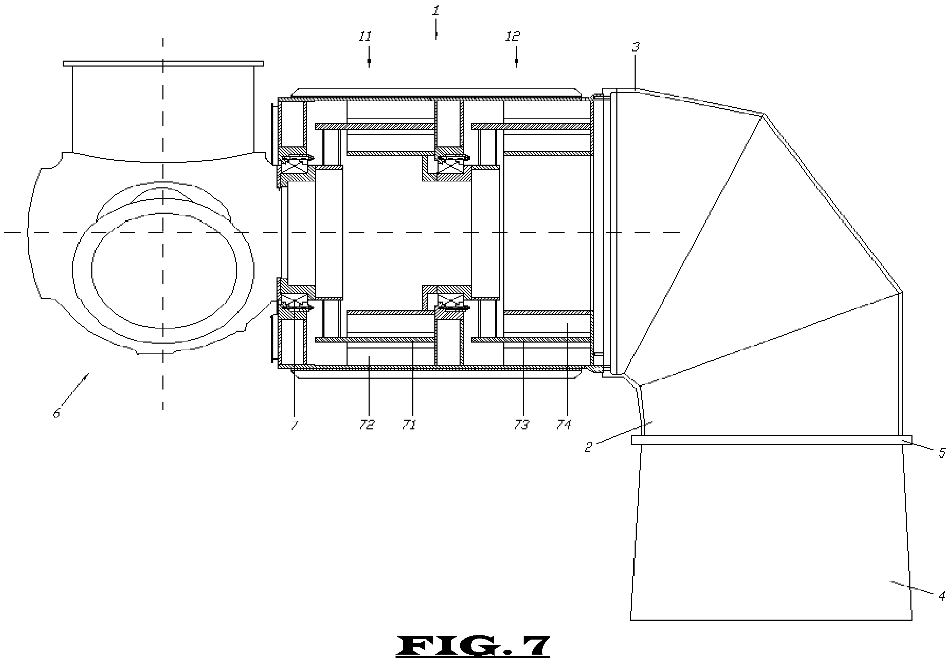

FIG. 7 shows a wind turbine that combines the serial multiple cluster arrangement of FIG. 2 with the concentric multiple generator of FIG. 3. Thus, drive blades 6 drive a first double rotor 71 within a first double stator 72, the first double rotor being mechanically connected to a second double rotor 73 within a respective double stator 74.

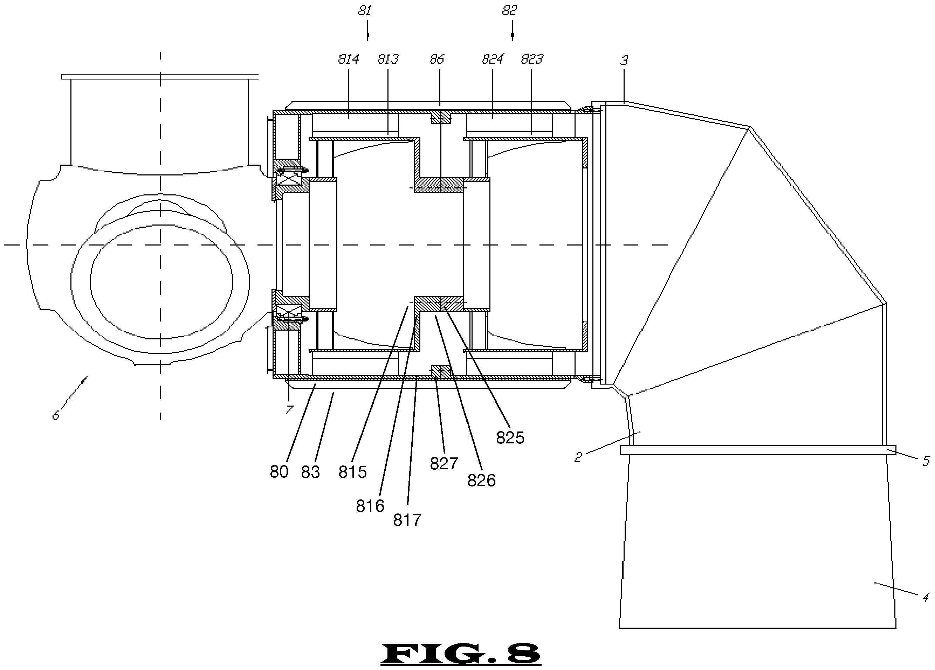

FIG. 8 shows a wind turbine very similar to that shown in FIG. 2, but which employs flanges 86 between generators to create a modular arrangement. As in the arrangement shown in FIG. 2, two generators 81, 82 are both on one side of the supporting structure 2. Thus, the drive blade arrangement 6 is connected to the rotor 813 of the first generator 81, which includes a relatively short connector 815, such as a short tube, that terminates in a flange 816. The flange 816 is connected to a corresponding flange 826 on a second connector 825 of the second generator 82. Thus, the first rotor 813 is connected to the second rotor 823 via connectors 815, 825, and flanges 816, 826. In this arrangement, the two housings 811, 821 preferably also include corresponding flanges 817, 827. As shown, the two generators 81, 82 are effectively modules. The modules can rely on the single bearing 7 of the first generator 81, though additional bearings could be employed if necessary. The fins 112, 122 of FIG. 2 can be combined to form one longer plurality of circumferentially-distributed cooling fins 83 extending from the housing 80, or can simply be left separate and aligned when the modules are assembled. As should be clear, the modular arrangement shown in FIG. 8 can be employed in other arrangements, such as those shown in FIGS. 1-7, to allow modular construction of wind turbines including multiple generators and/or generator clusters.

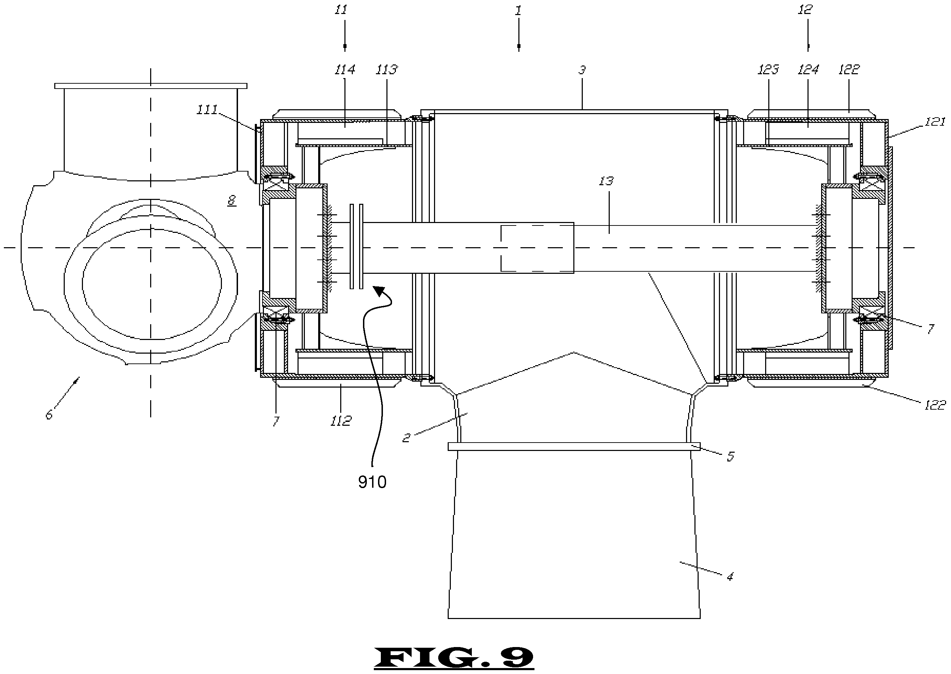

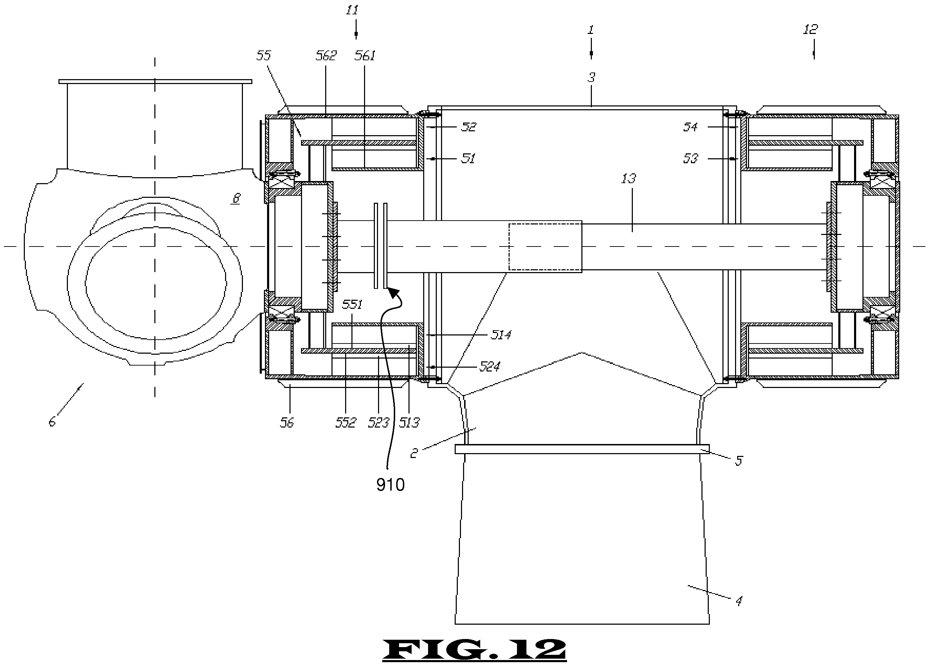

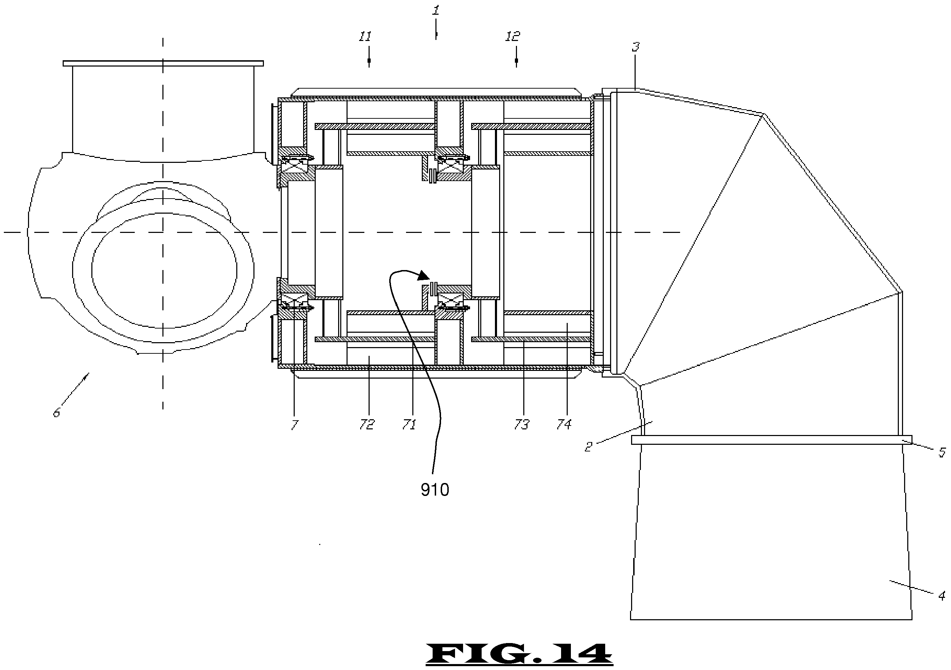

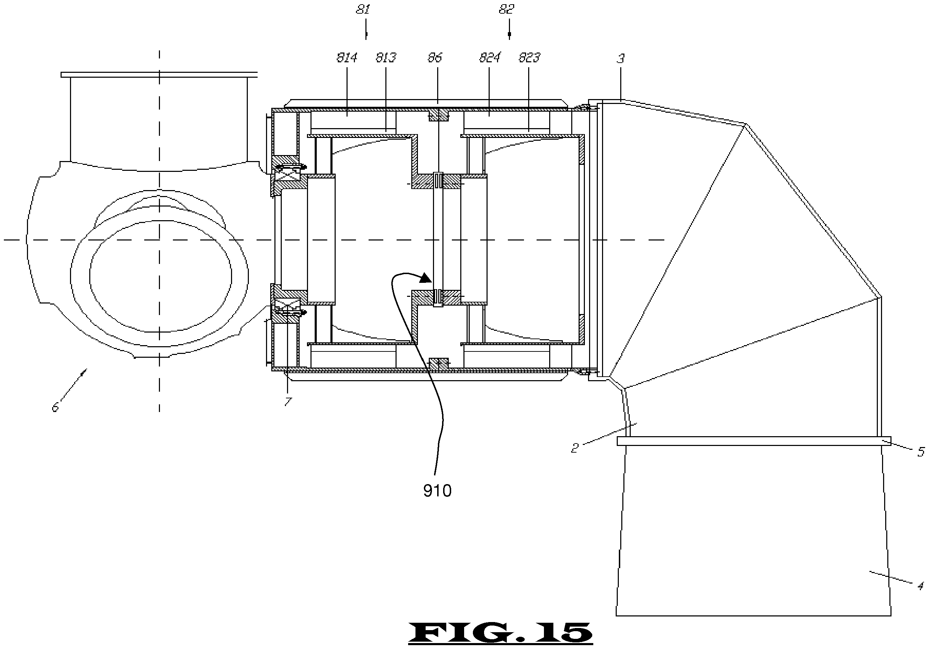

As should be apparent, while one or two generators are shown in each cluster in FIGS. 1-7, more generators could be combined in each embodiment as desired within each cluster or as additional clusters. In all embodiments, one or more clutches can be included between various of the generators to enable variable power output of the wind turbine and operation of the wind turbine at lower speeds than would be required if all generators were operating at the same time. Some examples of arrangements that can be employed are shown in FIGS. 9-16. FIG. 9 shows the arrangement of FIG. 1, but with a clutch 910 schematically illustrated in the path between the first and second rotors. While the clutch is shown in the main shaft, it should be apparent that it could be in one of the rotors, between one of the rotors and the shaft, or embedded within the joint of the two half-shafts of the main shaft. Any suitable type of clutch can be used. For a clutch between the half shafts, a centrifugal clutch can be particularly advantageous. In operation, the first generator would operate for all wind speeds over the minimum speed required to drive just the first generator. When the wind speed is below a minimum for using both generators, the clutch is not engaged and only the first generator is used. When the wind speed reaches a minimum for using both generators, the clutch is engaged to bring the second generator on line. FIGS. 12, 14, and 15 show clutched versions of FIGS. 5, 7, and 8 that operate in a manner similar to the clutched version of FIG. 1 shown in FIG. 9.

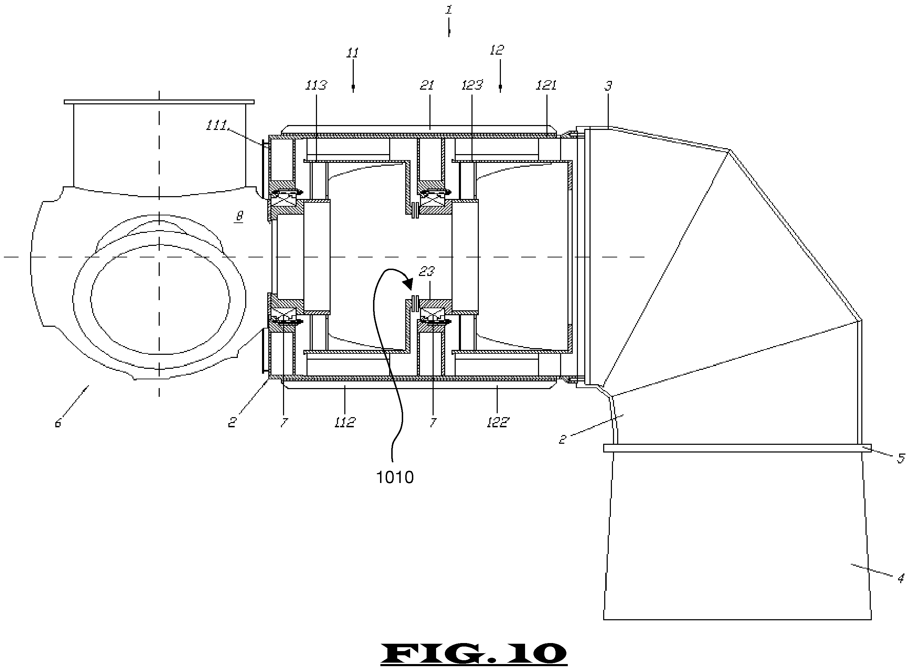

FIG. 10 shows the arrangement of FIG. 2, but with a clutch 1010 schematically illustrated between the first and second rotors. It should be apparent that the clutch could be in any suitable location between the two rotors, and that any suitable type of clutch can be used. In operation, the first generator would operate for all wind speeds over the minimum speed required to drive just the first generator. When the wind speed is below a minimum for using both generators, the clutch is not engaged and only the first generator is used. When the wind speed reaches a minimum for using both generators, the clutch is engaged to bring the second generator on line.

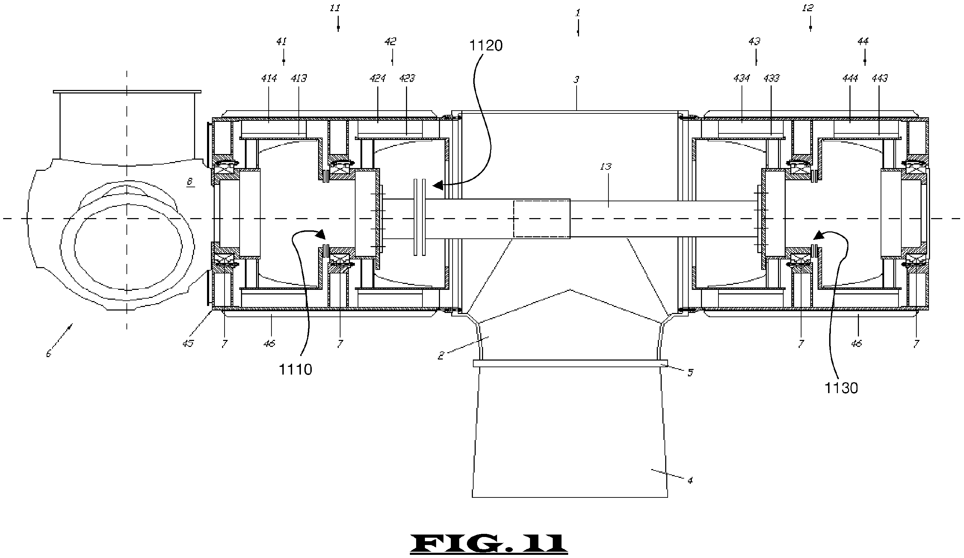

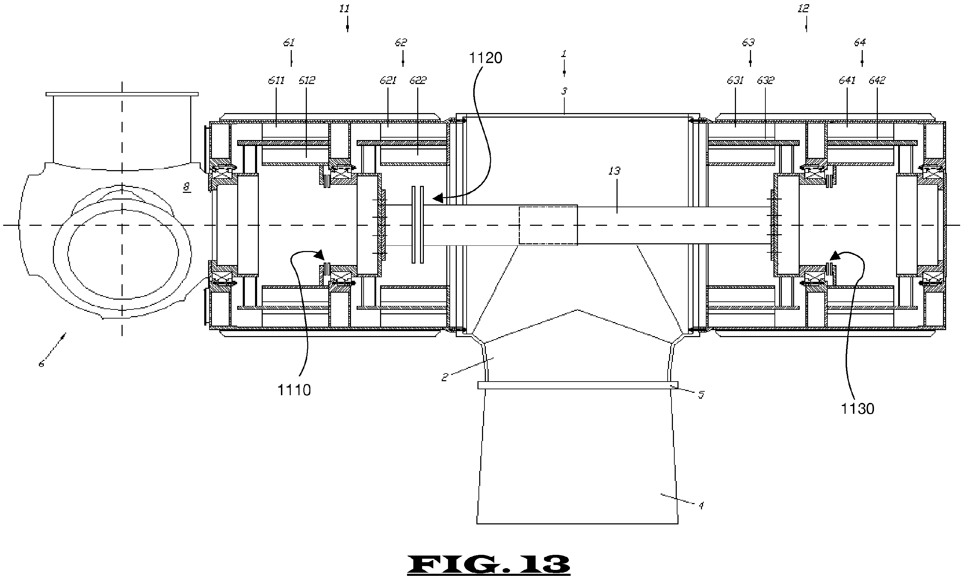

FIG. 11 shows the arrangement of FIG. 4, but with clutches 1110, 1120, 1130 schematically illustrated between the first and second rotors 1110, in the path between the first and second generator clusters 1120, and between the third and fourth rotors 1130. Three clutches are shown, but not all are necessarily required. They are included for exemplary purposes. Any one, any two, or all three clutches could be used, and additional clutches could be used as appropriate. It should be apparent that each clutch could be in any suitable location between, and that any suitable type of clutch can be used. For a clutch between the half shafts, a centrifugal clutch can be particularly advantageous. In operation with the three clutches shown, the first generator would operate for all wind speeds over the minimum speed required to drive just the first generator. When the wind speed is below a minimum for using both generators in the first cluster, the clutch 1110 is not engaged and only the first generator is used. When the wind speed reaches a minimum for using both generators in the first cluster, the clutch 1110 between the first and second rotors is engaged to bring the second generator on line. When the wind speed reaches a higher speed required to drive the first cluster and one of the generators from the second cluster, the clutch 1120 between the clusters can be engaged. And when a still higher wind speed required to drive all generators, the third clutch 1130 can be engaged. FIG. 13, showing a clutched version of FIG. 6, can operate in a very similar manner.

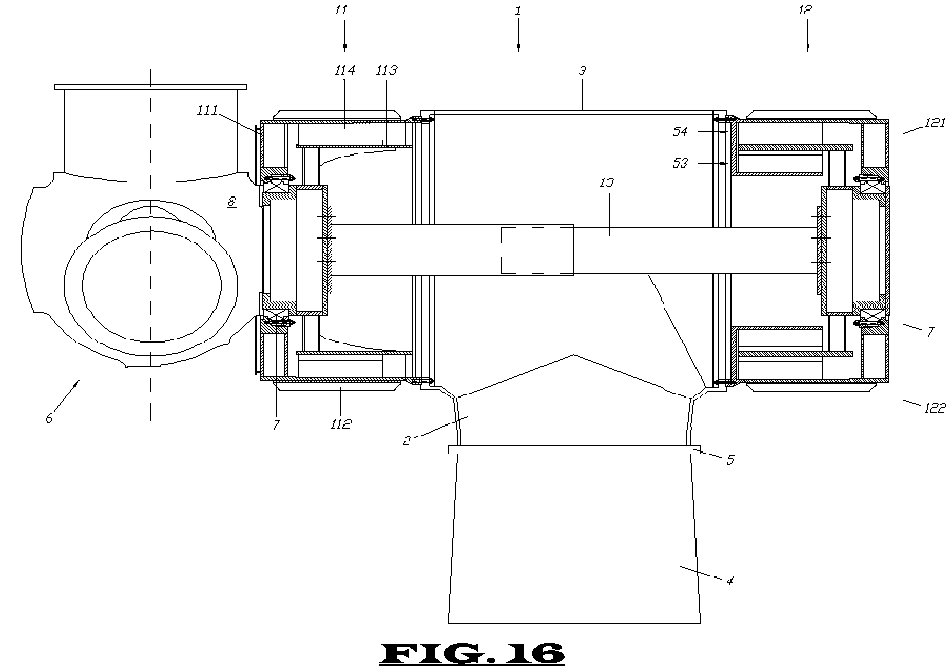

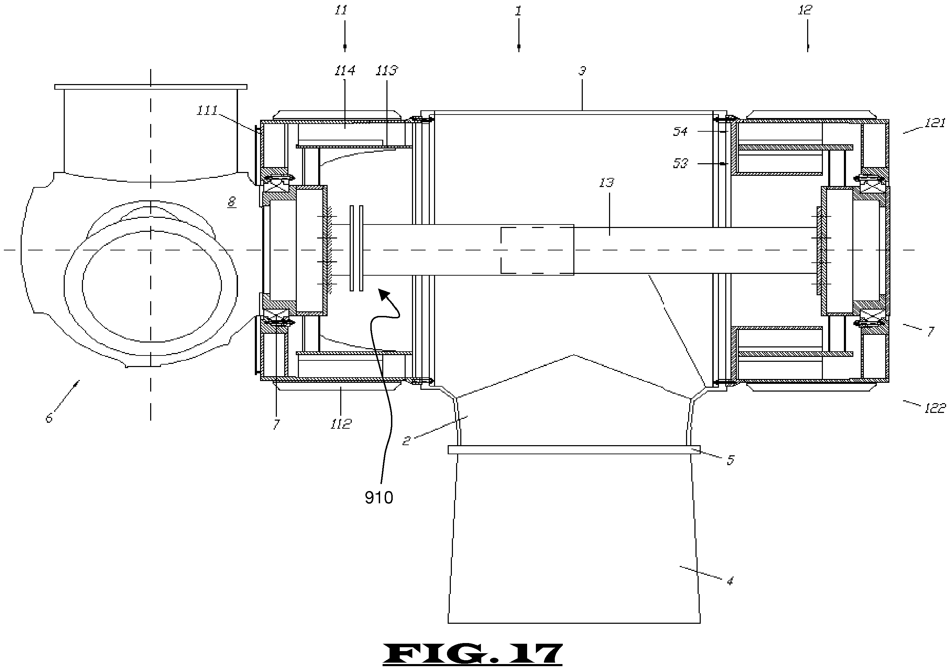

FIG. 16 is illustrative of the ability to mix different types of generators in the multiple generator turbine of embodiments. The particular example shown combines the simple annular generator of FIG. 1 on the left with the double-sided concentric generator of FIG. 3 on the right. FIG. 17 illustrates that clutches can be used in the mixed generator turbines of embodiments. The combination shown in FIGS. 16 and 17 is an example of a combination that could be made. It should be apparent that other combinations of generator types, even within clusters, are within the scope of the invention.

It will be appreciated that various of the above-disclosed and other features and functions, or alternatives thereof, may be desirably combined into many other different systems or applications. Also, it should be noted that various presently unforeseen or unanticipated alternatives, modifications, variations or improvements therein may be subsequently made by those skilled in the art which are also intended to be encompassed by the following claims.

## Claims

1. A multiple generator wind turbine comprising:
- a support structure (2) including a support tower (4) and a connecting structure (3) mounted atop the support tower (4);
- at least two generators (110, 120) each including a tubular rotor (113, 123) and a substantially tubular stator (114, 124) supported by the connecting structure (3); each rotor (113, 114) and each stator (114; 124) carrying one of mutually opposed magnetic field generators and windings and being substantially concentric such that one of the stator (114; 124) and rotor (113; 123) lies at least partly within the other of the stator (114, 124) and rotor (113, 123) and such that the mutually opposed magnetic field generators and windings face each other;
- a blade arrangement (6) on a side of one (110) of the generators opposite the support structure (2), the blade arrangement (6) including a hub attached to a rotor (113) of the one of the two generators (110, 120), and at least two blades extending radially from and supported by the hub;
wherein one generator (110) is mounted between the connecting structure (3) and the blade arrangement (6) on one side of the connecting structure (3) and the other generator (120) is mounted on a side of the connecting structure opposite the blade arrangement (6) and the rotor (113) of one generator (110) is mechanically connected to the rotor (114) of the other generator (124).

2. The multiple generator wind turbine of claim 1 wherein each generator (110; 120) includes a single bearing (7) mounted diametrically between the rotor (113; 123) and the stator (114; 124); an inner race of the bearing (7) being carried on a hub end of the inner of the stator (114; 124) and the rotor (113; 123) and an outer race of the bearing (7) is carried on a hub end of the outer of the stator (114; 124) and the rotor (113; 123), the single bearing (7) handling both thrust and journal loading.

3. The multiple generator wind turbine of claim 1 wherein the two generators (110, 120) are modular.

4. The multiple generator wind turbine of claim 1 wherein the connecting structure (3) is substantially tubular.

5. The multiple generator wind turbine of claim 1 wherein one rotor (113) is mechanically connected to the other rotor (123) via a clutch.
